# EUROPÄISCHE PATENTSCHRIFT

(11) **EP 0 584 729 B1**
(45) Veröffentlichungstag und Bekanntmachung des Hinweises auf die Patenterteilung: **21.01.1998**
(21) Anmeldenummer: 93113306.0
(22) Anmeldetag: 20.08.1993
(51) Int. Cl.: B23B 47/28

(54) **Vorrichtung zum Bohren von miteinander fluchtenden Dübellöchern**
Drilling device for dowel holes
Dispositif de perçage pour trous de chevilles

(30) Priorität: 26.08.1992 DE 4228285
(43) Veröffentlichungstag der Anmeldung: 02.03.1994
(73) Patentinhaber: Klapperich, Leo, D-56653 Wehr (DE)
(72) Erfinder: Klapperich, Leo, D-56653 Wehr (DE)
(74) Vertreter: Kossobutzki, Walter, Dipl.-Ing.(FH)

(56) Entgegenhaltungen:
- EP-A- 0 143 871
- EP-A- 0 146 417
- DE-A- 2 432 137
- DE-A- 2 910 567
- US-A- 2 522 400
- US-A- 2 819 630

## Beschreibung

Die Erfindung bezieht sich auf eine Vorrichtung zum Bohren von genau miteinander fluchtenden Dübellöchern in zwei durch Dübel und Klebung miteinander zu verbindenden Brettern oder dgl., bestehend aus einer auf dem zu bohrenden Brett auflegbaren Platte mit mindestens einem Führungsloch für einen Bohrer und mit einem einstellbaren und abnehmbaren Anschlag.

Aus der DE-PS 27 50 868 ist ein sogenanntes Hilfsgerät zum Bohren von Dübellöchern in stirn-flachseitig miteinander zu verdübelnde Bretter bekannt, welche aus einer auf dem zu bohrenden Brett auflegbaren Platte besteht. In diese Platte ist mindestens ein Führungsloch für ein Bohrwerkzeug eingearbeitet. Jedem Führungsloch ist ein Dübelabgreifteil zugeordnet, welches eine ebene, zur Mittelachse des Führungsloches parallele Brettanlagefläche und mindestens einen zur Brettanlagefläche hin offenen Dübelabgreifschlitz aufweist. Dabei ist die Innenweite des Dübelabgreifschlitzes gleich dem Durchmesser des Führungsloches ausgebildet. Schließlich liegen noch die Mittelachsen des Dübelabgreifschlitzes und des Führungsloches in einer gemeinsamen, zur Brettanlagefläche senkrechten Ebene.

Die Handhabung eines solchen Hilfsgerätes erfolgt in der Weise, daß zunächst das stirnseitig zu bohrende Brett mit einer Anzahl von Löchern versehen wird, die keinen genau vorgegebenen Abstand voneinander aufweisen müssen. Jetzt werden alle in dieses Brett gebohrte Dübellöcher zunächst vorübergehend mit Dübeln bestückt. Danach wird dieses mit Dübellöchern und Dübeln versehene Brett mit dem anderen, noch nicht gebohrten Brett bündig in einer Werkbank oder dgl. eingespannt. Sodann wird das Hilfsgerät so auf die Bretter gelegt, daß das Dübelabgreifteil mit seinem Dübelabgreifschlitz einen aus einem Dübelloch hervorragend den Dübel umfaßt. Damit wird das dem Dübelabgreifschlitz zugeordnete Führungsloch für das Bohrwerkzeug in eine solche Lage gebracht, daß ein äußerst exaktes Fluchten der einen Dübel aufnehmenden Dübellöcher der beiden Bretter gewährleistet ist. Nachdem auf diese Weise die Lage aller eingestecken Dübel in einem Brett abgetastet und im anderen Brett die entsprechenden, dazu fluchtenden Löcher gebohrt wurden, werden alle in die Dübellöcher des einen Brettes eingesteckten Dübel wieder entfernt. Danach folgt die übliche Verbindung der beiden Bretter durch Klebung, wobei jeweils ein Dübel in die fluchtenden Dübellöcher der beiden miteinander zu verbindenden Bretter ragt.

Die bekannte Hilfsvorrichtung macht es erforderlich, daß, um ein fluchtendes Dübelloch im zweiten Brett zu erzeugen, immer in das entsprechende Dübelloch des ersten Brettes ein Dübel eingesetzt werden muß, der vor der Verbindung der beiden Bretter durch Klebung wieder zu entfernen ist. Dies ist nicht nur umständlich, sondern auch zeitraubend. Diese zusätzliche Tätigkeit ist für jedes fluchtende Paar von Dübellöchern erforderlich, wobei im Bereich zweier miteinander durch Dübel und Klebung zu verbindender Bretter mindestens zwei Dübel mit den entsprechenden Dübellöchern verwendet werden. Hierbei ist jedoch noch nicht berücksichtigt, daß ein Dübel, wenn er nicht sehr genau gefertigt ist und unter Spannung in das Dübelloch eingesetzt wurde, beim Herausziehen aus einem Dübelloch beschädigt oder sogar zerstört werden kann. Sollten die Dübel in der Dübelbohrung des ersten Brettes Spiel haben, wird die Genauigkeit der Lage der Dübellöcher im zweiten Brett erheblich beeinträchtigt. Das vorbekannte Hilfsgerät ist aufgrund der Stehzapfen zum Ausrichten des Führungsloches auf die Stirnseite eines Brettes auf maximal drei Führungslöcher begrenzt. Werden Führungslöcher mit anderem Durchmesser benötigt, ist ein weiteres Hilfsgerät erforderlich.

Der Erfindung liegt deshalb die Aufgabe zugrunde, eine Vorrichtung zum Bohren von genau miteinander fluchtenden Dübellöchern in zwei durch Dübel und Klebung miteinander zu verbindenden Brettern oder dgl. aufzuzeigen, bei der das bisher erforderliche Einsetzen und Entfernen der Dübel in den Dübellöchern eines Brettes zur Lagebestimmung der Bohrungen des zweiten Brettes nicht mehr erforderlich ist.

Zur Lösung dieser Aufgabe wird bei einer Vorrichtung der eingangs beschriebenen Gattung vorgeschlagen, daß dem Führungsloch ein ein Dübelloch des bereits gebohrten Brettes fluchtend abtastender, an der Platte oder den Anschlag verstellbarer Zentrierstift zugeordnet ist.

Bei einer derartig ausgebildeten Vorrichtung wird zur Bestimmung der Lage des Führungsloches für den Bohrer zur Herstellung des Dübelloches im zweiten Brett ein immer wieder verwendbarer Zentrierstift verwendet, der die genaue Lage des entsprechenden Dübelloches im ersten Brett abtastet. Das bisher erforderliche Einsetzen und anschließende Entfernen der Dübel kann durch diese Vorrichtung entfallen. Der mit der Erstellung von miteinander fluchtenden Dübellöchern in zwei miteinander zu verbindenden Brettern oder dgl. verbundene Arbeitsaufwand wird erheblich vereinfacht und reduziert. Die Gefahr einer Beschädigung oder Zerstörung von Dübeln ist ausgeschlossen.

Weitere Merkmale einer Vorrichtung gemäß der Erfindung sind in den Ansprüchen 2 - 10 offenbart.

Die Erfindung wird nachfolgend anhand in einer Zeichnung dargestellter Ausführungsbeispiele näher erläutert. Dabei zeigen
- Fig. 1: eine perspektivische Darstellung einer Vorrichtung gemäß der Erfindung auf der Stirnseite eines Brettes,
- Fig. 2: die Vorrichtung der Fig. 1 auf zwei übereinanderliegenden Brettern,
- Fig. 3: die Vorrichtung der Fig. 1 auf zwei hochkant angeordneten Brettern,
- Fig. 4: die Vorrichtung der Fig. 1 im Bereich des Versatzes zweier übereinanderliegender Bretter und
- Fig. 5: eine weitere Ausbildung einer Vorrichtung der Erfindung.

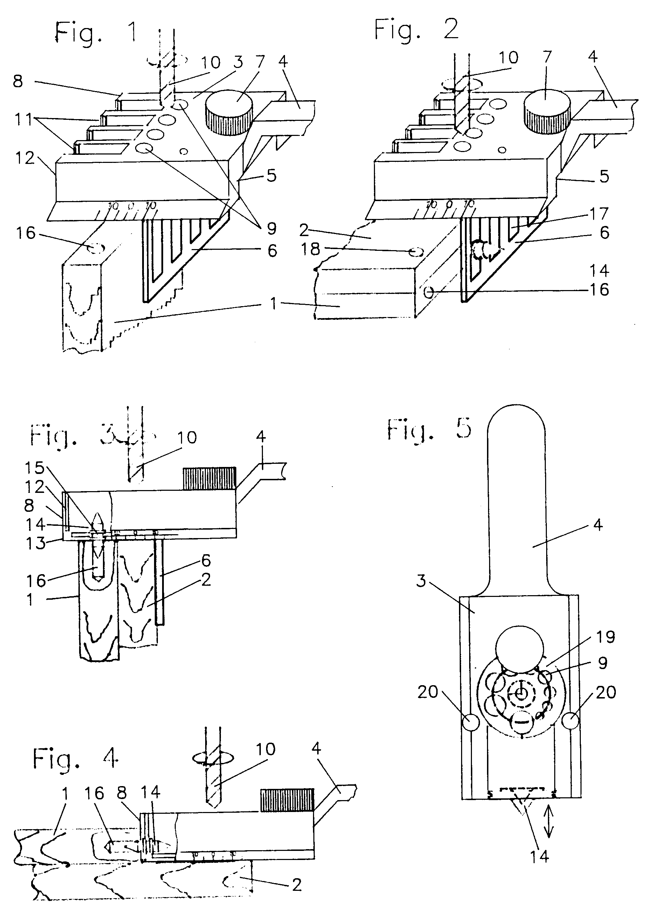

Die in den Figuren 1 - 5 der Zeichnung dargestellten Vorrichtungen dienen zum Bohren von genau miteinander fluchtenden Dübellöchern in zwei durch Dübel und Klebung miteinander zu verbindenden Brettern 1,2. Sie besteht zunächst aus einer Platte 3, an die ein Handgriff 4 angeschlossen ist. Bei der Vorrichtung gemäß den Figuren 1 bis 4 weist die Platte 3 eine annähernd quadratische Grundfläche auf. An der Unterseite der Platte 3 ist eine in Richtung des Handgriffes 4 verlaufende Führung 5 vorgesehen, die einen Anschlag 6 aufnimmt. Der Anschlag 6 besitzt etwa winkelförmigen Querschnitt, wobei ein Schenkel verschiebbar in der Führung 5 gehalten ist und mittels einer nur angedeuteten Schraube 7 in einstellbaren Lagen festgespannt werden kann. Der Anschlag 6 verläuft rechtwinklig zu den beiden Seitenflächen der Platte 3, insbesondere aber parallel zur Vorderfläche 8 der Platte 3.

In der Platte 3 sind in diesem Ausführungsbeispiel mit Abstand zur Vorderfläche 8 vier Führungslöcher 9 für einen nur angedeuteten Bohrer 10 vorgesehen, die auf einer Linie parallel zur Vorderfläche 8 angeordnet sind und unterschiedliche Durchmesser, beispielsweise 6 mm, 8 mm, 10 mm und 12 mm aufweisen. Die Führungslöcher 9 erstrecken sich durch die gesamte Platte 3 und verlaufen genau senkrecht zur Grundfläche derselben.

Zwischen der Vorderfläche 8 und den Führungslöchern 9 sind Führungsschlitze 11 vorgesehen, deren Mittelebene genau in der Mittelachse der Führungslöcher 9 verläuft. Die Führungsschlitze 11 können dem Durchmesser des jeweils zugeordneten Führungsloches 9 entsprechen. Im dargestellten Ausführungsbeispiel sind jedoch alle Führungsschlitze 11 gleich groß ausgebildet. An jeder Seitenfläche eines Führungsschlitzes 11 befinden sich zwei rechtwinklig zueinander angeordnete Führungsleisten 12,13, wobei sich die auf den Seitenflächen eines Führungsschlitzes 11 angeordneten Führungsleisten 12,13 fluchtend gegenüberliegen und somit eine gemeinsame Führung bilden. Auf den durch die Führungsleisten 12 und 13 gebildeten Führungen kann jeweils ein Zentrierstift 14 verschoben werden, wobei die Verschiebung des Zentrierstiftes 14 immer nur in einer Richtung, also parallel oder senkrecht zur Grundfläche der Platte 10 möglich ist.

Jeder Zentrierstift 14 besteht zunächst aus einem nur angedeuteten Führungsteil 15, welches die Verschiebung an den Führungsleisten 12,13 ermöglicht. An dieses Führungsteil 15 schließt sich der eigentliche Zentrierstift 14 an, der im Ausführungsbeispiel der Fign. 1 - 4 zylindrisch ausgebildet ist und an seinem freien Ende mit einer Fase versehen sein kann. Bedarfsweise kann beidseitig des Führungsteiles 15 ein Zentrierstift 14 vorgesehen sein, wobei jedoch diese beiden Zentrierstifte 14 einen unterschiedlichen Durchmesser besitzen.

Die soeben beschriebene Vorrichtung wird nun gemäß Figur 1 zur Herstellung von Dübellöchern 16 in der Stirnseite des Brettes 1 verwendet. Dabei wird die Platte 3 über den Anschlag 6 so auf die Stirnfläche des Brettes 1 ausgerichtet, daß sich die Führungslöcher 9 mittig über der Stirnfläche des Brettes 1 befinden. Nun wird ein Bohrer 10 gewählt, der dem Durchmesser des herzustellenden Dübelloches 16 entspricht. Dieser Bohrer 10 wird nun durch das entsprechende Führungsloch 9 abgesenkt und dabei die Dübelbohrung 16 an einer genau vorgegebenen Stelle erzeugt.

Wenn alle Dübellöcher 16 in dieser Stirnfläche des Brettes 1 hergestellt wurden, wird die Vorrichtung aus ihrer in Fig. 1 gezeichneten Lage entfernt. Auf das bereits mit Dübellöchern 16 versehene Brett 1 wird nun ein zweites Brett aufgelegt, wie dies in Fig. 2 gezeigt ist, und fest mit dem Brett 1 verspannt. Im Ausführungsbeispiel der Figuren 1 und 2 sind nun im senkrechten Teil des Anschlages 6 Führungsschlitze 17 vorgesehen, die ebenfalls fluchtend zu den Führungslöchern 9 angeordnet sind. In dem dem entsprechenden Führungsloch 9 zugeordneten Führungsschlitz 17 wird nun der Zentrierstift 14 derart eingeführt, daß er mit seinem zylindrischen Teil ein Dübelloch 16 abtasten kann. Sobald sich der Zentrierstift 14 im Dübelloch 16 des Brettes 1 befindet, der Anschlag 6 liegt an den Stirnflächen der beiden Bretter 1 und 2 an, kann mit dem Bohrer 10 ein fluchtendes Dübelloch 18 im Brett 2 gebohrt werden.

Nachdem alle Dübellöcher 18 auf diese Weise im Brett 2 hergestellt wurden, können die beiden Bretter 1 und 2 unter Verwendung von Dübeln und Kleber in an sich bekannter Weise miteinander verbunden werden.

In der Fig. 3 der Zeichnung ist die Vorrichtung in einer solchen Lage gezeigt, daß in die Stirnfläche des Brettes 2 Dübellöcher gebohrt werden können. Hier nimmt ein Führungsschlitz 11 den entsprechenden Zentrierstift 14 auf, der in das Dübelloch 16 des Brettes 1 ragt. In einer nun durch den Anschlag 6 vorgegebenen Lage kann nun das entsprechende Dübelloch in der Stirnfläche des Brettes 2 gebohrt werden.

Die Figur 4 der Zeichnung offenbart das Bohren von Dübellöchern im Brett 2 ähnlich der Figur 2. Hier liegt die Vorrichtung mit ihrer Vorderfläche 8 an der mit Dübellöchern 16 versehenen Stirnfläche des Brettes 1 und der Zentrierstift 14 ragt in ein Dübelloch 16. Das Brett 2 ist nun um ein vorgegebenes Maß gegenüber dem Brett 1 versetzt, so daß in dem Brett 2 mittels des Bohrers 10 an den genau vorgegebenen Stellen die in Fig. 2 erkennbaren Dubellöcher 18 gebohrt werden können.

Bei der Vorrichtung gemäß Fig. 5 trägt die Platte 3 eine Drehscheibe 19, in der mehrere Führungslöcher 9 mit unterschiedlichem Durchmesser eingearbeitet sind. Jeweils das in der Zeichnung mittig unten befindliche Führungsloch 9 dient zur Führung eines Bohrers 10 für die Herstellung eines Dübelloches. Um das Dübelloch 16 im Brett 1 zu erzeugen, ist die Platte 3 mit zwei Stehzapfen 20 ausgerüstet, über die das jeweils zur Wirkung kommende Führungsloch 9 auf die Mitte der Stirnfläche des zu bohrenden Brettes 1 ausgerichtet werden kann. Der Zentrierstift 14 ist hier als federnd gelagernder, konischer Zapfen ausgebildet, der im dargestellten Ausführungsbeispiel zusätzlich senkrecht zur Grundfläche der Platte 3 verschoben werden kann. Über diesen Zentrierstift 14 kann die Vorrichtung der Fig. 5 in gleicher Weise wie die Vorrichtung in Fig. 4 anhand des bereits gebohrten Dübelloches 16 im Brett 1 ausgerichtet und das dazugehörige Dübelloch 18 fluchtend gebohrt werden. Zusätzlich ist es möglich, den Zentrierstift 14 in einer Ebene parallel zur Grundfläche der Platte 3 zu verschieben. Die Vorrichtung der Fig. 5 ist dann ähnlich wie in Fig. 3 einsetzbar. Die konische Ausbildung des Zentrierstiftes 14 bringt den Vorteil, daß für unterschiedlich große Dübellöcher 16 nur ein Zentrierstift 14 erforderlich ist, der jedoch dann in axialer Richtung federnd gelagert sein muß.

Selbstverständlich ist es bei der Vorrichtung der Figur 5 auch möglich, an der Unterseite bzw. der Grundfläche der Platte 3 einen Anschlag vorzusehen, der bedarfsweise, wie in Fig. 2 dargestellt, auch in Führungsschlitzen 17 Zentrierstifte 14 aufnehmen kann.

In Abänderung der erläuterten Ausführungsbeispiele ist es schließlich möglich, die Führungen für die Zentrierstifte 14 anders zu gestalten. Die Führungsleisten 12,13 können beispielsweise durch entsprechend angeordnete Führungsnuten oder dgl. ersetzt sein. Die Platte 3 mit Handgriff 4 und der Anschlag 6 können in vorteilhafter Weise aus Kunststoff hergestellt sein. Die Führungslöcher 9 sind mit metallischen Buchsen ausgekleidet, die eine besonders gute Führung des jeweiligen Bohrers 10 ermöglichen. Die Zentrierstifte 14 bestehen aus insbesondere verschleißfestem Kunststoff.

## Patentansprüche

1. Vorrichtung zum Bohren von genau miteinander fluchtenden Dübellöchern (16) in zwei durch Dübel und Klebung miteinander zu verbindenden Brettern (1, 2) oder dgl., bestehend aus einer auf dem zu bohrenden Brett (1, 2) auflegbaren Platte (3) mit mindestens einem Führungsloch (9) für einen Bohrer (10) und mit einem einstellbaren und abnehmbaren Anschlag (6),
dadurch gekennzeichnet,
daß dem Führungsloch (9) ein ein Dübelloch (16) des bereits gebohrten Brettes (1) fluchtend abtastender, an der Platte (3) oder dem Anschlag (6) verstellbarer Zentrierstift (14) zugeordnet ist.

2. Vorrichtung nach Anspruch 1,
dadurch gekennzeichnet,
daß mehreren Führungslöchern (9) jeweils ein getrennter Zentrierstift (14) zugeordnet ist.

3. Vorrichtung nach Anspruch 1,
dadurch gekennzeichnet,
daß mehreren Führungslöchern (9) ein gemeinsamer Zentrierstift (14) zugeordnet ist und jedes Führungsloch (9) fluchtend zum Zentrierstift (14) einstellbar ausgebildet ist.

4. Vorrichtung nach Anspruch 3,
dadurch gekennzeichnet,
daß die Führungslöcher (9) auf einer Kreislinie einer drehbaren Scheibe (19) angeordnet sind.

5. Vorrichtung nach mindestens einem der Ansprüche 1 - 4,
dadurch gekennzeichnet,
daß der Zentrierstift (14) konisch ausgebildet und in axialer Richtung federnd gehalten ist.

6. Vorrichtung nach mindestens einem der Ansprüche 1 - 4,
dadurch gekennzeichnet,
daß der Zentrierstift (14) weitgehend zylindrisch ausgebildet ist.

7. Vorrichtung nach mindestens einem der Ansprüche 1 - 6,
dadurch gekennzeichnet,
daß die Platte (3) mindestens einen jeweils einem Führungsloch (9) zugeordneten Führungsschlitz (11) für einen Zentrierstift (14) aufweist.

8. Vorrichtung nach Anspruch 7,
dadurch gekennzeichnet,
daß in dem Führungsschlitz (11) zwei um 90° zueinander versetzte Führungen (12,13) angeordnet sind.

9. Vorrichtung nach Anspruch 8,
dadurch gekennzeichnet,
daß jede Führung durch zwei auf sich gegenüberliegenden Seiten des Führungsschlitzes (11) angeordneten Führungsleisten (12,13) oder Führungsnuten gebildet ist.

10. Vorrichtung nach Anspruch 1,
dadurch gekennzeichnet,
daß auch im Anschlag (6) Führungsschlitze (17) zur Aufnahme eines Zentrierstiftes (14) angeordnet sind.

## Claims

1. Device for drilling precisely aligned dowel holes (16) in two boards (1, 2) or the like to be joined together by means of dowels and gluing, consisting of a plate (3) which can be placed on the board (1, 2) to be drilled, comprising at least one guide hole (9) for a drill (10) and an adjustable and removable stop (6), characterised in that a centring pin (14) adjustable on the plate (3) or the stop (6) and aligned with a dowel hole (16) in the already drilled board (1) is associated with the guide hole (9).

2. Device according to claim 1, characterised in that separate centring pins (14) are associated with a plurality of guide holes (9).

3. Deuce according to claim 1, characterised in that one common centring pin (14) is associated with a plurality of guide holes (9) and each guide hole (9) is adjustable in alignment with the centring pin (14).

4. Device according to claim 3, characterised in that the guide holes (9) are arranged on a circle of a rotary disc (19).

5. Device according to at least one of claims 1 - 4, characterised in that the centring pin (14) is conical and is spring-loaded in the axial direction.

6. Device according to at least one of claims 1 - 4, characterised in that the centring pin (14) is substantially cylindrical.

7. Device according to at least one of claims 1 - 6, characterised in that the plate (3) has at least one guide slot (11) for a centring pin (14) associated with each guide hole (9).

8. Device according to claim 7, characterised in that too guides (12, 13) offset by 90° relative to one another are arranged in the guide slot (11).

9. Device according to claim 8, characterised in that each guide is formed by two guide bars (12, 13) or guide grooves arranged on opposite sides of the guide slot (11).

10. Device according to claim 1, characterised in that guide slots (17) for receiving a centring pin (14) are also arranged in the stop (6).

## Revendications

1. Dispositif de perçage de trous de chevilles (16) à disposer en alignement précis dans deux planches (1, 2), ou éléments analogues, qui seront assemblées avec des chevilles et par collage l'une à l'autre, lequel dispositif comprend un plateau (3) qui peut être posé sur la planche (1, 2) à percer et qui est muni d'au moins un trou de guidage (9) pour un foret (10) et d'une butée (6) réglable et susceptible d'être retirée, caractérisé en ce qu'une goupille de centrage (14), réglable contre le plateau (3) ou la butée (6), destinée à palper l'alignement du trou de cheville (16) déjà percé dans la planche (1), est associée au trou de guidage (9).

2. Dispositif selon la revendication 1, caractérisé en ce que chaque trou de guidage (9) est associé à une goupille de centrage (14) séparée.

3. Dispositif selon la revendication 1, caractérisé en ce qu'une goupille de centrage (14) commune est associée à plusieurs trous de guidage (9), chaque trou de guidage (9) étant conçu pour pouvoir être réglé en alignement avec la goupille de centrage (14).

4. Dispositif selon la revendication 3, caractérisé en ce que les trous de guidage (9) sont disposés en cercle sur un disque rotatif (19).

5. Dispositif selon l'une quelconque des revendications 1 à 4, caractérisé en ce que la goupille de centrage (14) est conçue sous forme conique et maintenue de manière souple dans le sens axial.

6. Dispositif selon l'une quelconque des revendications 1 à 4, caractérisé en ce que la goupille de centrage (14) est conçue sous forme largement cylindrique.

7. Dispositif selon l'une quelconque des revendications 1 à 6, caractérisé en ce que le plateau (3) est muni d'au moins une fente de guidage (11) pour une goupille de centrage (14), laquelle fente de guidage est associée à chaque trou de guidage (9).

8. Dispositif selon la revendication 7, caractérisé en ce que deux glissières de guidage (12, 13) sont disposées dans la fente de guidage (11) en formant l'une avec l'autre un angle de 90°.

9. Dispositif selon la revendication 8, caractérisé en ce que chaque glissière de guidage est formée par deux listels de guidage (12, 13) ou rainures de guidage, disposés sur les côtés opposés de la fente de guidage (11).

10. Dispositif selon la revendication 1, caractérisé en ce que la butée (6) est également munie de fentes de guidage (17) destinées à recevoir une goupille de centrage (14).
